# EUROPEAN PATENT APPLICATION

(11) **EP 4 517 680 A1**
(43) Date of publication of application: **05.03.2025**
(21) Application number: 24189538.2
(22) Date of filing: 18.07.2024
(51) Int. Cl.: G06V 10/24, G06V 10/62, G06V 20/13, G06V 20/17

(54) **IMAGE PROCESSING METHOD AND SYSTEM FOR IDENTIFYING A FEATURE WITHIN A SCENE**

(30) Priority: 18.08.2023 US 202318452299
(71) Applicant: The Boeing Company, Arlington, VA 22202 (US)
(72) Inventor: MASEQUESMAY, Maurice, Arlington, 22202 (US); HAGEN, Kevin C., Arlington, 22202 (US); LAU, Jonathan K., Arlington, 22202 (US)
(74) Representative: Bryn-Jacobsen, Caelia

(57) **Abstract**

A computing device, method and computer program product are provided to identify a feature. In a method, images are captured at different points in time and space and a reference plane is defined in a reference frame. The method includes applying image warping to map a plurality of reference points of a respective image in a sensor plane to corresponding reference points of the reference plane and mapping pixel coordinates for a plurality of pixels of the reference plane to the respective image based upon a positional relationship between the reference plane and a representation of the respective image established by having applied image warping to the respective image. The method further includes interpolating from pixels of the respective image to pixels at the pixel coordinates of the reference plane to generate an interpolated representation of the respective image that is then used to identify the feature within the scene.

## Description

### TECHNOLOGICAL FIELD

An example relates generally to a method, a computing device and a system for identifying a feature within a scene and, more particularly, to a method, a computing device and a system for identifying a feature within a scene based upon a comparison of images of the scene captured at different points in time and space.

### BACKGROUND

Various applications depend upon the identification of a feature that appears within a scene. For example, some applications may require that an object that is in motion relative to a background be tracked. Alternatively, applications may require that an object that either appears within or disappears from a scene be identified. Although features may be identified within a scene in various manners, image processing techniques may be utilized in order to compare image samples of the scene that have been captured at different points in time and space. By eliminating or discounting the background of a scene that appears in each of the images, these image processing techniques attempt to identify objects that change between the images, thereby permitting objects in motion to be detected and tracked and/or permitting objects that appear or disappear from the scene to be identified. For example, satellites, spacecraft, aircraft, or the like may carry a sensor configured to capture images of a portion of the Earth. By comparing the images captured by the sensor, an object that is in relative motion to the Earth, such as an aircraft or other object in flight, can be detected and tracked.

In order to allow for reliable image processing, such as to identify a feature within the scene, the images of the scene that are captured at different points in time must be registered or aligned with one another. By registering the images, the noise associated with the image processing may be reduced, thereby improving the accuracy with which a feature may be identified within a scene. However, movement of the sensor that captures the images and/or movement of the underlying scene may make it more difficult to register images captured at different points in time. With respect to processing the images captured by a sensor carried by a satellite, spacecraft, aircraft of the like, the rotation of the Earth and the movement of the satellite, spacecraft, aircraft, line-of-sight, or the like relative to the Earth increases the difficulty associated with properly registering the images and, as a result, may increase the noise associated with the resulting image processing and decrease the accuracy with which a feature may be identified.

In some applications, the images are to be processed in order to identify a feature within a scene in real-time or in near real-time. While the images may be translated to better align the images in real-time or near real-time, higher order corrections, such as rotation and nonlinear stretching, that are required to better register the images are computationally intensive and cannot generally be performed in real-time. As a result, the applications that require image processing in real-time or near real-time generally suffer from more noise and consequently are less accurate in regard to the identification of a feature within the scene since the images that are processed are typically not as well registered as would be desired.

### BRIEF SUMMARY

A method, a computing device and a system are provided for identifying a feature within a scene based upon images captured of the scene at different points in time and space. The method, computing device and system of an example are configured to process the images and to identify a feature within the scene in a real-time or near real-time manner. In addition, by relying upon image warping between a reference plane and a sensor plane, the method, computing device and system are configured to identify the feature within the scene with reduced noise and increased accuracy by providing not only for warping, but also rotation and translation, preferably in a real-time or near real-time manner.

A method is provided in accordance with an example for identifying a feature within a scene. The method includes obtaining a plurality of images captured at different points in time and at different points in space and defining a reference plane in a reference frame, such as a reference plane that is perpendicular to a boresight of a sensor that captures the plurality of images and/or a reference plane that is tangential to the Earth's surface. The method also includes applying image warping to map a plurality of reference points of a respective image of the plurality of images in a sensor plane to corresponding reference points of the reference plane and mapping pixel coordinates for a plurality of pixels of the reference plane to the respective image based upon a positional relationship between the reference plane and a representation of the respective image established by having applied image warping to the respective image. The method further includes interpolating from pixels of the respective image to pixels at the pixel coordinates of the reference plane to generate an interpolated representation of the respective image and using the interpolated representation of the respective image to identify the feature within the scene.

The method of an example applies image warping by applying at least one of a 1.5 or higher order polynomial, bilinear or projective transform to the respective image in order to concurrently provide for rotation, translation and warping of the respective image. In combination with or independent of the foregoing example, the method of one example interpolates by performing a bilinear interpolation from the pixels of the respective image in the sensor plane to the pixel coordinates of the reference plane as mapped to the sensor plane.

In addition to or independent of the foregoing examples, the method of an example defines the reference plane by defining the reference plane based upon a mapping of another one of the plurality of images to the reference plane. In this example, the method may use the interpolated representation of the respective image to identify the feature within the scene by determining a difference between the interpolated representation of the respective image and the another one of the plurality of images as mapped to the reference plane in order to identify the feature within the scene. In addition to or independent of the foregoing examples, the method of an example uses the interpolated representation of the respective image to identify the feature within the scene by determining a difference between: (i) the interpolated representation of an average of the plurality of images captured during a first period of time as mapped to the reference plane, including the interpolated representation of the respective image, and (ii) an average of a second plurality of images captured during a second period of time as also mapped to the reference plane.

In another example, a computing device is provided that is configured to identify a feature within a scene. The computing device includes processing circuitry configured to obtain a plurality of images captured at different points in time and different points in space and to define a reference plane in a reference frame, such as a reference plane that is perpendicular to a boresight of a sensor that captures the plurality of images, and/or a reference plane that is tangential to the Earth's surface. The processing circuitry is also configured to apply image warping to map a plurality of reference points of a respective image of the plurality of images in a sensor plane to corresponding reference points of the reference plane. The processing circuitry is also configured to map pixel coordinates for a plurality of pixels of the reference plane to the respective image based upon a positional relationship between the reference plane and a representation of the respective image established by having applied image warping to the respective image. The processing circuitry is further configured to interpolate from pixels of the respective image to pixels at the pixel coordinates of the reference plane to generate an interpolated representation of the respective image and to use the interpolated representation of the respective image to identify the feature within the scene.

The processing circuitry of an example is configured to apply image warping by applying at least one of a 1.5 or higher order polynomial, bilinear, or projective transform to the respective image in order to concurrently provide for rotation, translation, and warping of the respective image. In addition to or independent of the foregoing example , the processing circuitry of an example is configured to interpolate by performing a bilinear interpolation from the pixels of the respective image in the sensor plane to the pixel coordinates of the reference plane as mapped to the sensor plane.

In addition to or independent of the foregoing examples, the processing circuitry of an example is configured to define the reference plane by defining the reference plane based upon a mapping of another one of the plurality of images to the reference plane. In this example, the processing circuitry may be configured to use the interpolated representation of the respective image to identify the feature within the scene by determining a difference between the interpolated representation of the respective image and the another one of the plurality of images as mapped to the reference plane in order to identify the feature within the scene. In addition to or independent of the foregoing examples, the processing circuitry of an example is configured to use the interpolated representation of the respective image to identify the feature within the scene by determining a difference between: (i) the interpolated representation of an average of the plurality of images captured during a first period of time as mapped to the reference plane, including the interpolated representation of the respective image, and (ii) an average of a second plurality of images captured during a second period of time as also mapped to the reference plane.

A system is provided in accordance with an example that is configured to identify a feature within a scene. The system includes at least one sensor configured to capture a plurality of images at different points in time and space. The system also includes processing circuitry configured to obtain a plurality of images captured at different points in time and different points in space and to define a reference plane in a reference frame, such as a reference plane that is perpendicular to a boresight of a sensor that captures the plurality of images and/or a reference plane that is tangential to the Earth's surface. The processing circuitry is also configured to apply image warping to map a plurality of reference points of a respective image of the plurality of images in a sensor plane to corresponding reference points of the reference plane. The processing circuitry is also configured to map pixel coordinates for a plurality of pixels of the reference plane to the respective image based upon a positional relationship between the reference plane and a representation of the respective image established by having applied image warping to the respective image. The processing circuitry is further configured to interpolate from pixels of the respective image to pixels at the pixel coordinates of the reference plane to generate an interpolated representation of the respective image and to use the interpolated representation of the respective image to identify the feature within the scene.

The processing circuitry of an example is configured to apply image warping by applying at least one of a 1.5 or higher order polynomial, bilinear or projective transform to the respective image in order to concurrently provide for rotation, translation and warping of the respective image. In addition to or independent of the foregoing example, the processing circuitry of an example is configured to interpolate by performing a bilinear interpolation from the pixels of the respective image in the sensor plane to the pixel coordinates of the reference plane as mapped to the sensor plane. In addition to or independent of the foregoing examples, the processing circuitry of an example is configured to define the reference plane by defining the reference plane based upon a mapping of another one of the plurality of images to the reference plane. In this example, the processing circuitry may be configured to use the interpolated representation of the respective image to identify the feature within the scene by determining a difference between the interpolated representation of the respective image and the another one of the plurality of images as mapped to the reference plane in order to identify the feature within the scene.

### BRIEF DESCRIPTION OF THE DRAWINGS

Having thus described certain examples of the present disclosure in general terms, reference will hereinafter be made to the accompanying drawings, which are not necessarily drawn to scale, and wherein:
Figure 1 depicts a sensor carried by a satellite and configured to capture a plurality of images of a portion of the Earth at different points in time and space;
Figure 2 is a block diagram of system that is configured to identify a feature within a scene in accordance with an example of the present disclosure;
Figure 3 is a flow chart of the operations performed, such as by the system of Figure 2, in accordance with an example of the present disclosure;
Figure 4 is a schematic representation of a reference plane defined in accordance with one example of the present disclosure;
Figures 5A and 5B illustrate a reference plane and an image captured at a different point in time in a reference plane and a sensor plane, respectively, and Figure 5C illustrates stacking of the reference plane and the image captured at the different point in time after performance of the image warping in accordance with an example of the present disclosure; and
Figure 6 illustrates first and second groups of images capture during first and second periods of time, respectively.

### DETAILED DESCRIPTION

The present disclosure now will be described more fully hereinafter with reference to the accompanying drawings, in which some, but not all aspects are shown. Indeed, the disclosure may be embodied in many different forms and should not be construed as limited to the aspects set forth herein. Rather, these aspects are provided so that this disclosure will satisfy applicable legal requirements. Like numbers refer to like elements throughout.

A method, computing device, and system are provided in accordance with the present disclosure in order to capture and process a plurality of images of a scene in order to identify a feature within the scene. Although described below with respect to the processing of images captured of a portion of the Earth by a sensor carried by a satellite, spacecraft, aircraft, or the like in order to identify an object, such as an aircraft or other airborne object, moving relative to the Earth, the method, computing device and system may be configured to identify a wide variety of features within various scenes and are not limited to the identification of an object moving relative to a portion of the Earth.

Additionally, the method, computing device and system of an example are described below to identify a feature within a scene based upon a plurality of images of the scene captured at different points in time and different points in space and processed in real-time or near real-time, thereby identifying the feature within the scene while the feature remains within the scene. However, the method, computing device and system of other examples are configured to process images to identify a feature within a scene at a later point in time. As such, the images that are processed in these other examples may have been stored to permit subsequent identification of the feature that appeared within the scene in the past.

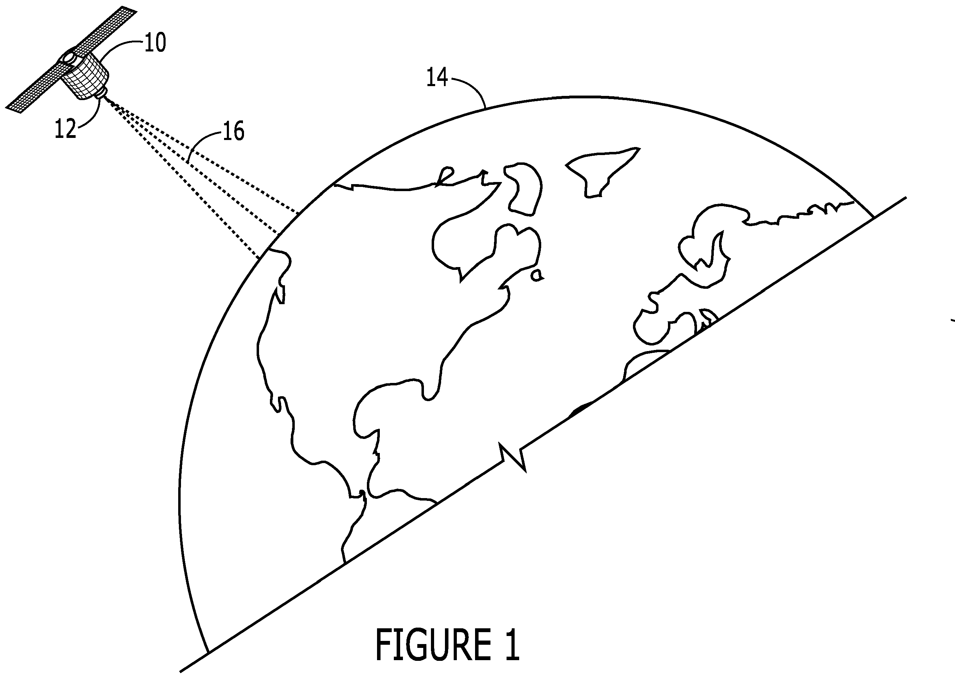

Referring to Figure 1, the capture of a plurality of images of a scene is depicted. These images may then be processed as described below in accordance with an example of the present disclosure to identify a feature within the scene. In the illustrated example, a satellite 10 carries a sensor 12, such as an image sensor, configured to capture an image of a portion of the Earth 14 about which the satellite orbits. In this regard, the sensor carried by the satellite defines a boresight 16, e.g., a line of sight, about which the image captured by the sensor is centered. The sensor is configured to capture a plurality of images at respective points in time. For example, a sensor can be configured to capture a video comprised of a plurality of sequential images of the scene with each image of the video being captured at a different position and a respective point in time.

As a result of the rotation of the Earth 14 and the orbital movement of the satellite 10 carrying the sensor 12 about the Earth, the images captured at a plurality of different times are not properly registered or aligned with one another even though the images capture the same scene or portions of the same scene. As such, the method, computing device, and system of an example provide for processing of the images to allow for more accurate registration of the images, thereby reducing the noise associated with the image analysis and improving the reliability and accuracy with which a feature within the scene can be identified. As described below, the method, computing device, and system of an example are configured to process the images so as to improve the registration of the images in a manner that can be performed in real-time or near real-time, thereby supporting applications that demand that a feature within a scene be identified while the feature is still within the scene.

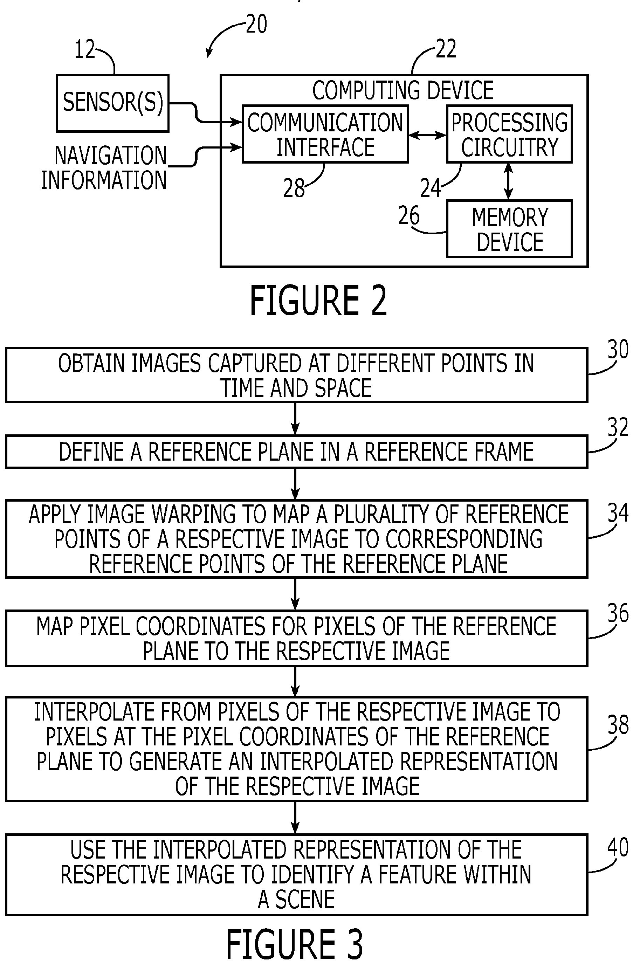

Referring now to Figure 2, a block diagram of a system 20 configured to identify a feature within a scene in accordance with an example of the present disclosure is provided. As shown, the system includes one or more sensors 12 configured to capture a plurality of images at different points in time and different points in space. The sensor can be an image sensor and, as such, may include a plurality of sensor elements defining respective pixels of the resulting image. The sensor elements can be positioned in a planar arrangement, thereby defining a sensor plane in which the image is captured. In one example, the sensor is carried by an airborne platform, such as a satellite 10, a spacecraft, an aircraft, or other air vehicle, and configured to capture images of a portion of the Earth 14. However, the system of other examples may include other types of sensors for capturing images of different types of scenes.

The system 20 also includes a computing device 22 configured to receive the plurality of images captured by the sensor 12 at different points in time and different points in space and to then process the images as described below. Additionally, the computing device can be configured to receive other types of information including, for example, navigation information for the airborne platform that carries the sensor. This navigation information can include, for example, a state vector of the platform, the attitude of the platform, the location of the platform at the time at which an image was captured, such as may be provided as global positioning system (GPS) coordinates, the time at which the image was captured and the like.

The computing device 22 can be embodied in a variety of manners, including, for example, as any a variety of different types of computers, such as a server, an image processing system, or the like. Thus, a specific hardware design is not required, but any of a variety of computing devices may be configured to operate as described herein. Regardless of the type of computing device that is configured to process images in order to identify a feature within a scene, the computing device as shown in Figure 3 includes processing circuitry 24 and optionally at least one non-transitory memory device 26 and/or a communication interface 28.

In some examples, the processing circuitry 24 can be in communication with the memory device 26 via a bus for passing information among components of the computing device 22. The memory device can be non-transitory and can include, for example, one or more volatile and/or non-volatile memories. In other words, for example, the memory device may be an electronic storage device (for example, a computer readable storage medium) comprising gates configured to store data (for example, bits) that can be retrievable by a machine (for example, a computing device like the processing circuitry). The memory device can be configured to store information, data, content, applications, instructions, or the like for enabling the computing device to carry out various functions in accordance with an example of the present disclosure. For example, the memory device can be configured to store navigation information and/or images captured by the sensor for processing by the processing circuitry. Additionally or alternatively, the memory device can be configured to store instructions for execution by the processing circuitry.

The processing circuitry 24 can be embodied in a number of different ways. For example, the processing circuitry may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some examples, the processing circuitry can include one or more processing cores configured to perform independently. A multi-core processor can enable multiprocessing within a single physical package. Additionally or alternatively, the processing circuitry can include one or more processors configured in tandem via the bus to enable independent execution of instructions, pipelining and/or multithreading.

In an example, the processing circuitry 24 can be configured to execute instructions stored in the memory device 26 or otherwise accessible to the processing circuitry. Alternatively or additionally, the processing circuitry can be configured to execute hard coded functionality. As such, whether configured by hardware or software methods, or by a combination thereof, the processing circuitry can represent an entity (for example, physically embodied in circuitry) capable of performing operations according to an example of the present disclosure while configured accordingly. Thus, for example, when the processing circuitry is embodied as an ASIC, FPGA, or the like, the processing circuitry can be specifically configured hardware for conducting the operations described herein. Alternatively, as another example, when the processing circuitry is embodied as an executor of software instructions, the instructions can specifically configure the processing circuitry to perform the algorithms and/or operations described herein when the instructions are executed. However, in some cases, the processing circuitry can be a processor of a specific device (for example, an image processing system) configured to employ an example of the present disclosure by further configuration of the processor by instructions for performing the algorithms and/or operations described herein. The processing circuitry can include, among other things, a clock, an arithmetic logic unit (ALU) and/or one or more logic gates configured to support operation of the processing circuitry.

The computing device 22 of an example can also include the communication interface 28. The communication interface can be any means such as a device or circuitry embodied in either hardware or a combination of hardware and software that is configured to receive and/or transmit data from/to the sensor 12 and other electronic devices in communication with the computing device. The communication interface can be configured to communicate in accordance with various wireless protocols including Global System for Mobile Communications (GSM), such as but not limited to Long Term Evolution (LTE). In this regard, the communication interface can include, for example, an antenna (or multiple antennas) and supporting hardware and/or software for enabling communications with a wireless communication network. Additionally or alternatively, the communication interface can include the circuitry for interacting with the antenna(s) to cause transmission of signals via the antenna(s) or to handle receipt of signals received via the antenna(s). In some environments, the communication interface can alternatively or also support wired communication.

Turning now to Figure 3, the operations performed in accordance with an example, such as by the computing device 22 of Figure 2, are depicted. As shown in block 30, the computing device includes means, such as the processing circuitry 24, the communication interface 28, the memory device 26, or the like, for obtaining a plurality of images captured at different points in time and different points in space by one or more sensors 12. The computing device may receive the images directly from a sensor or from an intermediary device that stores and/or otherwise relays the images. Along with the plurality of images, the computing device also generally receives navigation information relating to the airborne platform such as the satellite 10, carrying the sensor at the time that each image is captured by a sensor. The computing device, such as the processing circuitry, may be configured to store the plurality of images as well as the associated navigation information, such as in the memory device, so as to facilitate processing of the images as described below.

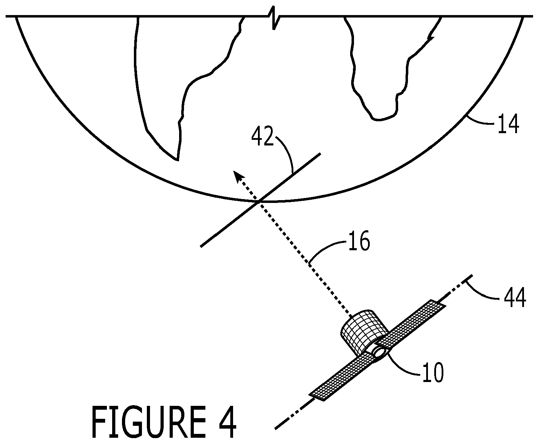

As shown in block 32, the computing device 20 also includes means, such as the processing circuitry 22 or the like, for defining a reference plane in a reference frame. The reference plane may be defined in various manners. In one example depicted in Figure 4, the reference plane 42 is a plane that is perpendicular or normal to the boresight 16, e.g., the line of sight, along which the sensor 12 captures an image within the sensor plane 44. In one example environment, the reference plane may be positioned so as to be normal to the boresight at the location at which the boresight intersects the surface of the Earth 14. However, in other examples, the reference plane may be normal to the boresight at a predefined distance along the boresight from the location at which the boresight intersects the surface of the Earth. The reference plane can also be defined to be tangential to the surface of the oblate Earth (by projecting the sensor field of view to the tangent plane) at the location at which the boresight intersects the surface of the Earth. In this example, the reference plane may be defined so as to be the predefined distance above the surface of the Earth at the location of which the boresight intersects the surface of the Earth or the predefined distance below the surface of the Earth at the location at which the boresight intersects the surface of the Earth.

In order to define the reference plane within the reference frame 42, the computing device 22, such as the processing circuitry 24, can be configured to identify the intersection of the periphery or edge of one of the images captured by the sensor 12 with the reference plane. In this example, the periphery or edge of the image that intersects with the reference plane defines the reference plane within the reference frame. For example with respect to images having a square or rectangular shape, the computing device, such as the processing circuitry, can be configured to identify the intersection of the corners of one of the images captured by the sensor with the reference plane. In this example, the corners of the image that intersect the reference plane may be connected by straight lines to define the reference plane within the reference frame. Although the computing device, such as the processing circuitry, may be configured to utilize any of the images captured at different points in time and space in order to define the reference plane within the reference frame, the computing device of an example is configured to utilize the first image of a plurality of images in order to define the reference plane within the reference frame. In this regard, the first image is the image of the plurality of images that is captured at the earliest point in time from among the plurality of images. Although the reference plane can be arbitrarily selected which may require mapping an image, such as the first image to the reference plane, the reference plane can also be selected from the available images and, in this instance, the image from which the reference plane is selected will advantageously not need to be warped to the reference plane as the image is already in the reference plane.

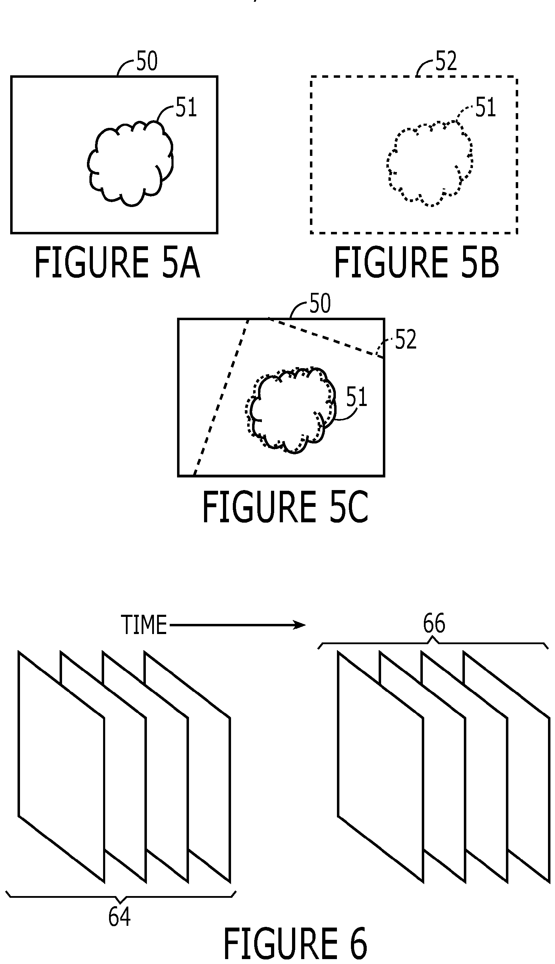

One example of a reference plane 50 in the reference frame 42 is depicted in Figure 5A. As shown, the reference plane depicts a feature 51. In this case, the feature is a cloud, although any of a variety of features and any number of features may be depicted by the reference plane. As a result of the movement of the scene, such as the Earth 14, relative to the sensor 12 and/or movement of the sensor relative to the scene, images of the same scene captured at different points in time and space are not generally aligned in the reference plane, but, instead, are misaligned relative to one another. By way of example of this misalignment, a second image 52 captured at a second point in time, after the point in time in which the image that defines the reference plane was captured, is depicted in dashed lines in Figure 5B. The second image depicts the same feature, that is, a cloud, albeit at a somewhat different position. In this regard, the second image captured at a different point in time from the first image that defines the reference plane is misaligned in the reference frame relative to the reference plane since the relative movement between the sensor and the scene that occurred between the first and second times at which the first and second images were captured causes the sensor plane 44 to be differently positioned and, in one example, no longer be parallel to the reference plane when the second image is captured.

As a result of the misalignment in the reference plane 42, the pixels of the second image 52 that has been captured at a different point in time are misaligned relative to the pixels of the reference plane 50. While an interpolation may be performed from the pixels of the second image to the pixels of the reference plane so as to facilitate registration of the images captured at different points in time and space within the reference frame, this interpolation is computationally intensive and, as a result, time consuming. Thus, this interpolation in the reference plane cannot generally be performed in this manner in real-time or near real-time, as demanded by at least some applications with respect to the identification of a feature within a scene.

As such, the computing device 22 of an example includes means, such as the processing circuitry 24 or the like, for applying image warping to map reference points of a respective image (hereinafter referenced as the second image 52) of the plurality of images in the sensor plane 44 to corresponding reference points of the image that defines the reference plane 50. See block 34 of Figure 3. Although any type of reference points may be utilized for the image warping, the reference points of one example are the corners of the second image in an instance in which the second image is rectangular. In this example, the corners of the second image are mapped to corresponding reference points of the image that defines the reference plane, that is, to points of the image that defines the reference plane that depict or represent the same feature as the corners of the second image. By way of example, Figure 5C depicts that portion of a representation of the second image (represented by dashed outline) that falls within the bounds of the reference plane after having applied image warping to the second image.

The computing device 22, such as the processing circuitry 24, may be configured to apply image warping to map reference points of a second image 52 in the sensor plane 44 to corresponding reference points of the image that defines the reference plane 50 in various manners. In one example, however, the computing device, such as the processing circuitry, applies one of a 1.5 or higher order polynomial transform, a bilinear transform or a projective transform to the second image to map reference points of the second image to corresponding reference points of the image that defines the reference plane. In so doing, the computing device, such as the processing circuitry, not only provides for warping of the second image, but also concurrently provides for rotation, translation and non-linear scaling of the second image.

As shown in block 36 of Figure 3 and based on the image warping, the computing device 22 also includes means, such as the processing circuitry 24 or the like, for mapping pixel coordinates for a plurality of pixels of the reference plane 50 to the respective image 52, e.g., the second image. In this regard, based on the image warping and the resulting positional relationship in the reference plane 42 between the reference plane and the representation of the second image that is established by the mapping of reference points from the second image to corresponding reference points in the image that defines the reference plane, pixel coordinates for a plurality of pixels of the reference plane are mapped to the respective image. In this regard, the pixel coordinates of each pixel of the reference plane or at least each pixel of the reference plane that falls within the representation of the second image in the reference plane are mapped by being offset by an amount equal to the offset in the positional relationship between the reference plane and the representation of the second image in the reference plane. The offset in the positional relationship may be defined in various manners, but in one example, is defined by an angular rotation of the representation of the second image to the reference plane and by a positional offset, e.g., an x offset and a y offset, between a center point of the representation of the second image and the center point of the reference plane. In this example, the pixel coordinates of the pixels of the reference plane may be mapped to the second image in the sensor plane 44 by modifying the pixel coordinates by an amount defined for a respective pixel by the angular rotation and positional offset between the representation of the second image and the reference plane.

As shown in block 38 of Figure 3, the computing device 22 further includes means, such as the processing circuitry 24 or the like, for interpolating from pixels of the respective image 52, that is, the second image, to pixels at the pixel coordinates of the reference plane 50 to generate an interpolated representation of the second image. In this regard, each pixel of the second image or at least each pixel of that portion of the second image that aligns with or overlies the reference plane once image warping has been applied to the second image may be interpolated to pixels at the pixel coordinates of the reference plane.

By mapping the pixel coordinates for the pixels of the reference plane 50 to the second image 52 in the sensor plane 44, the subsequent interpolation of the pixels of the second image to the pixel coordinates of the reference plane can be performed in a more computationally efficient manner and, as a result, performed in real-time or near real-time. By performing the interpolation in a more computationally efficient manner, processing resources are conserved, thereby providing a technical advantage to the method, system 20 and computer program product of an example of the present disclosure. The computing device 22, such as the processing circuitry 24, may be configured to interpolate from the pixels of the second image to the pixel coordinates of the reference plane in various manners including, for example, by performing bilinear interpolation in order to generate an interpolated representation of the respective image.

As shown in block 40 of Figure 3, the computing device 22 also includes means, such as the processing circuitry 24 or the like, for using the interpolated representation of the respective image, e.g., the second image 52, to identify the feature 51 within the scene. As the interpolation is performed in the sensor plane 44, the interpolated representation of the respective image may first be mapped back to the reference plane 42. In this regard, the location of each pixel in the reference plane, e.g., pixel (0, 0), pixel (0, 1), pixel (1, 0), etc. that is mapped to the respective image may be maintained such that the image in the reference plane may be reconstructed with each pixel in the reference plane having a pixel value equal to the interpolated value of each pixel (as determined in the reference plane). The interpolated representation of the respective image in the reference plane may then be used in various manners to identify the feature within the scene. For example, the computing device, such as the processing circuitry, may be configured to determine the difference between the interpolated representation of the respective image, e.g., the second image, in the reference plane and another one of the plurality of images that has been captured and mapped to the reference plane in order to identify the feature within the scene. In one example depicted in Figure 5C, the interpolated representation of the second image depicted in dashed lines may be compared in the reference plane to the reference image depicted in solid lines in order to detect movement of a feature, e.g., a cloud, in the time between capture of the reference image and the second image.

As the interpolated representation of the second image has been mapped to the reference plane 42, the reference image 50 and the representation of the second image 52 are aligned or better aligned such that the difference between the interpolated representation of the second image in the reference plane and reference image has less noise and, as a result, provides for the identification of a feature 51 within the scene captured by the plurality of images with increased reliability and accuracy. In this regard, by determining the difference between the aligned representations of the images, the background or other portions of the scene that are in common in both images are eliminated such that the resulting difference image includes any features that change from one image to the next image. For example, an object, such as an airborne object, that is moving relative to the Earth 14 can be readily identified once the background has been eliminated from the images.

In another example illustrated in Figure 6, a first plurality of images 64 are captured at different points in time and space within the first period of time and a second plurality of images 66 are captured at different points in time and space within a second period of time. In this example, the computing device 22, such as the processing circuitry 24, is configured to use the interpolated representation of the respective image to identify the feature within the scene, such as the feature that is in motion relative to the background, by determining the difference between: (i) an average of the first plurality of images, captured during the first period of time, following mapping to the reference plane 42 and (ii) an average of the second plurality of images, captured during the second period of time, following mapping to the reference plane. In this example, either the first plurality of images or the second plurality of images includes the interpolated representation of the respective image such that the determination of the difference between the averages of the first and second plurality of images as mapped to the reference plane uses the interpolated representation of the respective image to identify the feature within the scene. As a result of using the interpolated representation of the respective image as mapped in the reference plane in the manner described above, the interpolated representation of the respective image in the reference plane is better aligned with other images that are also mapped to the reference plane such that an average or summation of the registered images will result in reducing the noise and increasing the accuracy and reliability with which the feature may be identified within the scene, such as in the manner described above.

As described above, a method, a computing device 22 and a system 20 are provided for identifying a feature within a scene based upon images captured of the scene at different points in time and space. The method, computing device and system of an example may be configured to process the images and identify a feature within the scene in a real-time or near real-time manner. In addition, by relying upon image warping between a reference plane 42 and a sensor plane 44, the method, computing device and system are configured to identify the feature within the scene with reduced noise and increased accuracy by providing not only for warping, but also rotation and translation of an image in a real-time or near real-time manner.

As described above, Figure 3 is a flowchart of a computing device 22, method, and computer program product configured to process images in order to identify a feature within a scene, such as to provide for tracking the object, according to an example. It will be understood that each block of the flowchart, and combinations of blocks in the flowchart, may be implemented by various means, such as hardware, firmware, processing circuitry 24, and/or other devices associated with execution of software including one or more computer program instructions. For example, one or more of the procedures described above may be embodied by computer program instructions. In this regard, the computer program instructions which embody the procedures described above may be stored by the memory device 26 of the computing device and executed by the processing circuitry or the like. As will be appreciated, any such computer program instructions may be loaded onto a computer or other programmable device (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some examples, certain ones of the operations above may be modified or further amplified. Furthermore, in some examples, additional optional operations may be included. Modifications, additions, or amplifications to the operations above may be performed in any order and in any combination.

Further examples are set out in the clauses below:
1. A method for identifying a feature within a scene, the method comprising:
   obtaining a plurality of images captured at different points in time and at different points in space;
   defining a reference plane in a reference frame;
   applying image warping to map a plurality of reference points of a respective image of the plurality of images in a sensor plane to corresponding reference points of the reference plane;
   mapping pixel coordinates for a plurality of pixels of the reference plane to the respective image based upon a positional relationship between the reference plane and a representation of the respective image established by having applied image warping to the respective image;
   interpolating from pixels of the respective image to pixels at the pixel coordinates of the reference plane to generate an interpolated representation of the respective image; and
   using the interpolated representation of the respective image to identify the feature within the scene.
2. A method according to Clause 1, wherein applying image warping comprises applying at least one of a 1.5 or higher order polynomial, bilinear or projective transform to the respective image in order to concurrently provide for rotation, translation and warping of the respective image. Or 2
3. A method according to Clause 1, wherein interpolating comprises performing a bilinear interpolation from the pixels of the respective image in the sensor plane to the pixel coordinates of the reference plane as mapped to the sensor plane.
4. A method according to any one of the preceding Clauses, wherein the reference plane is perpendicular to a boresight of a sensor that captures the plurality of images.
5. A method according to any one of the preceding Clauses, wherein defining the reference plane comprises defining the reference plane based upon a mapping of another one of the plurality of images to the reference plane.
6. A method according to Clause 5, wherein using the interpolated representation of the respective image to identify the feature within the scene comprises determining a difference between the interpolated representation of the respective image and the another one of the plurality of images as mapped to the reference plane in order to identify the feature within the scene.
7. A method according to any one of the preceding Clauses wherein using the interpolated representation of the respective image to identify the feature within the scene comprises determining a difference between: (i) the interpolated representation of an average of the plurality of images captured during a first period of time as mapped to the reference plane, including the interpolated representation of the respective image, and (ii) an average of a second plurality of images captured during a second period of time as also mapped to the reference plane.
8. A computing device configured to identify a feature within a scene, the computing device comprising processing circuitry configured to:
   obtain a plurality of images captured at different points in time and at different points in space;
   define a reference plane in a reference frame;
   apply image warping to map a plurality of reference points of a respective image of the plurality of images in a sensor plane to corresponding reference points of the reference plane;
   map pixel coordinates for a plurality of pixels of the reference plane to the respective image based upon a positional relationship between the reference plane and a representation of the respective image established by having applied image warping to the respective image;
   interpolate from pixels of the respective image to pixels at the pixel coordinates of the reference plane to generate an interpolated representation of the respective image; and
   use the interpolated representation of the respective image to identify the feature within the scene.
9. A computing device according to Clause 8, wherein the processing circuitry is configured to apply image warping by applying at least one of a 1.5 or higher order polynomial, bilinear or projective transform to the respective image in order to concurrently provide for rotation, translation and warping of the respective image.
10. A computing device according to Clause 8 or 9, wherein the processing circuitry is configured to interpolate by performing a bilinear interpolation from the pixels of the respective image in the sensor plane to the pixel coordinates of the reference plane as mapped to the sensor plane.
11. A computing device according to any one of Clauses 8-10, wherein the reference plane is perpendicular to a boresight of a sensor that captures the plurality of images.
12. A computing device according to any one of Clauses 8-11, wherein the reference plane is tangential to the Earth's surface.
13. A computing device according to any one of Clauses 8-12, wherein the processing circuitry is configured to define the reference plane by defining the reference plane based upon a mapping of another one of the plurality of images to the reference plane.
14. A computing device according to Clause 13, wherein the processing circuitry is configured to use the interpolated representation of the respective image to identify the feature within the scene by determining a difference between the interpolated representation of the respective image and the another one of the plurality of images as mapped to the reference plane in order to identify the feature within the scene.
15. A computing device according to any one of Clauses 8-1 1 wherein the processing circuitry is configured to use the interpolated representation of the respective image to identify the feature within the scene by determining a difference between: (i) the interpolated representation of an average of the plurality of images captured during a first period of time as mapped to the reference plane, including the interpolated representation of the respective image, and (ii) an average of a second plurality of images captured during a second period of time as also mapped to the reference plane.
16. A system configured to identify a feature within a scene, the system comprising:
   at least one sensor configured to capture a plurality of images at different points in time and at different points in space; and
   processing circuitry configured to:
      obtain a plurality of images captured at the different points in time and at the different points in space;
      define a reference plane in a reference frame;
      apply image warping to map a plurality of reference points of a respective image of the plurality of images in a sensor plane to corresponding reference points of the reference plane;
      map pixel coordinates for a plurality of pixels of the reference plane to the respective image based upon a positional relationship between the reference plane and a representation of the respective image established by having applied image warping to the respective image;
      interpolate from pixels of the respective image to pixels at the pixel coordinates of the reference plane to generate an interpolated representation of the respective image; and
      use the interpolated representation of the respective image to identify the feature within the scene.
17. A system according to Clause 16, wherein the processing circuitry is configured to apply image warping by applying at least one of a 1.5 or higher order polynomial, bilinear or projective transform to the respective image in order to concurrently provide for rotation, translation and warping of the respective image.
18. A system according to Clause 16 or 17, wherein the processing circuitry is configured to interpolate by performing a bilinear interpolation from the pixels of the respective image in the sensor plane to the pixel coordinates of the reference plane as mapped to the sensor plane.
19. A system according to any one of Clauses 16-18, wherein the processing circuitry is configured to define the reference plane by defining the reference plane based upon a mapping of another one of the plurality of images to the reference plane.
20. A system according to Clause 19, wherein the processing circuitry is configured to use the interpolated representation of the respective image to identify the feature within the scene by determining a difference between the interpolated representation of the respective image and the another one of the plurality of images as mapped to the reference plane in order to identify the feature within the scene.

Many modifications and other examples set forth herein will come to mind to one skilled in the art to which these disclosures pertain having the benefit of the teachings presented in the foregoing descriptions and the associated drawings. Therefore, it is to be understood that the disclosures are not to be limited to the specific examples disclosed and that modifications and are intended to be included within the scope of the appended claims. Moreover, although the foregoing descriptions and the associated drawings describe examples in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method for identifying a feature (51) within a scene, the method comprising:
obtaining (30) a plurality of images (64, 66) captured at different points in time and at different points in space;
defining (32) a reference plane (50) in a reference frame (42);
applying (34) image warping to map a plurality of reference points of a respective image of the plurality of images in a sensor plane (44) to corresponding reference points of the reference plane (50);
mapping (36) pixel coordinates for a plurality of pixels of the reference plane (50) to the respective image based upon a positional relationship between the reference plane (50) and a representation of the respective image established by having applied image warping to the respective image;
interpolating (38) from pixels of the respective image to pixels at the pixel coordinates of the reference plane (50) to generate an interpolated representation of the respective image; and
using (40) the interpolated representation of the respective image to identify the feature (51) within the scene.

2. A method according to Claim 1, wherein applying (34) image warping comprises applying at least one of a 1.5 or higher order polynomial, bilinear or projective transform to the respective image in order to concurrently provide for rotation, translation and warping of the respective image.

3. A method according to Claim 1 or 2, wherein interpolating (38) comprises performing a bilinear interpolation from the pixels of the respective image in the sensor plane (44) to the pixel coordinates of the reference plane (50) as mapped to the sensor plane (44).

4. A method according to any one of the preceding Claims, wherein the reference plane (50) is perpendicular to a boresight (16) of a sensor (12) that captures the plurality of images (64, 66).

5. A method according to any one of the preceding Claims, wherein defining (32) the reference plane (50) comprises defining the reference plane (50) based upon a mapping of another one of the plurality of images to the reference plane (50).

6. A method according to Claim 5, wherein using (40) the interpolated representation of the respective image to identify the feature (51) within the scene comprises determining a difference between the interpolated representation of the respective image and the another one of the plurality of images as mapped to the reference plane (50) in order to identify the feature (51) within the scene.

7. A method according to any one of the preceding Claims wherein using (40) the interpolated representation of the respective image to identify the feature (51) within the scene comprises determining a difference between: (i) the interpolated representation of an average of the plurality of images (64) captured during a first period of time as mapped to the reference plane (50), including the interpolated representation of the respective image, and (ii) an average of a second plurality of images (66) captured during a second period of time as also mapped to the reference plane (50).

8. A computing device (22) configured to identify a feature (51) within a scene, the computing device (22) comprising processing circuitry (24) configured to:
obtain a plurality of images (64, 66) captured at different points in time and at different points in space;
define a reference plane (50) in a reference frame (42);
apply image warping to map a plurality of reference points of a respective image of the plurality of images in a sensor plane (44) to corresponding reference points of the reference plane (50);
map pixel coordinates for a plurality of pixels of the reference plane (50) to the respective image based upon a positional relationship between the reference plane (50) and a representation of the respective image established by having applied image warping to the respective image;
interpolate from pixels of the respective image to pixels at the pixel coordinates of the reference plane (50) to generate an interpolated representation of the respective image; and
use the interpolated representation of the respective image to identify the feature (51) within the scene.

9. A computing device (22) according to Claim 8, wherein the processing circuitry (24) is configured to apply image warping by applying at least one of a 1.5 or higher order polynomial, bilinear or projective transform to the respective image in order to concurrently provide for rotation, translation and warping of the respective image.

10. A computing device (22) according to Claim 8 or 9, wherein the processing circuitry (24) is configured to interpolate by performing a bilinear interpolation from the pixels of the respective image in the sensor plane (44) to the pixel coordinates of the reference plane (50) as mapped to the sensor plane (44); or optionally
wherein the reference plane (50) is perpendicular to a boresight (16) of a sensor (12) that captures the plurality of images (64, 66); or optionally
wherein the reference plane (50) is tangential to the Earth's surface.

11. A computing device (22) according to Claim 8, wherein the processing circuitry (24) is configured to define the reference plane (50) by defining the reference plane (50) based upon a mapping of another one of the plurality of images to the reference plane (50); and optionally
wherein the processing circuitry (24) is configured to use the interpolated representation of the respective image to identify the feature (51) within the scene by determining a difference between the interpolated representation of the respective image and the another one of the plurality of images as mapped to the reference plane (50) in order to identify the feature (51) within the scene.

12. A computing device (22) according to Claim 8 wherein the processing circuitry (24) is configured to use the interpolated representation of the respective image to identify the feature (51) within the scene by determining a difference between: (i) the interpolated representation of an average of the plurality of images (64) captured during a first period of time as mapped to the reference plane (50), including the interpolated representation of the respective image, and (ii) an average of a second plurality of images (66) captured during a second period of time as also mapped to the reference plane (50).

13. A system (20) configured to identify a feature (51) within a scene, the system comprising:
at least one sensor (12) configured to capture a plurality of images (64, 66) at different points in time and at different points in space; and
processing circuitry (24) configured to:
obtain a plurality of images captured at the different points in time and at the different points in space;
define a reference plane (50) in a reference frame (42);
apply image warping to map a plurality of reference points of a respective image of the plurality of images in a sensor plane (44) to corresponding reference points of the reference plane (50);
map pixel coordinates for a plurality of pixels of the reference plane (50) to the respective image based upon a positional relationship between the reference plane (50) and a representation of the respective image established by having applied image warping to the respective image;
interpolate from pixels of the respective image to pixels at the pixel coordinates of the reference plane (50) to generate an interpolated representation of the respective image; and
use the interpolated representation of the respective image to identify the feature (51) within the scene.

14. A system (20) according to Claim 13, wherein the processing circuitry (24) is configured to apply image warping by applying at least one of a 1.5 or higher order polynomial, bilinear or projective transform to the respective image in order to concurrently provide for rotation, translation and warping of the respective image; or optionally
wherein the processing circuitry (24) is configured to interpolate by performing a bilinear interpolation from the pixels of the respective image in the sensor plane (44) to the pixel coordinates of the reference plane (50) as mapped to the sensor plane (44).

15. A system (20) according to Claim 13, wherein the processing circuitry (24) is configured to define the reference plane (50) by defining the reference plane (50) based upon a mapping of another one of the plurality of images to the reference plane (50); and optionally
wherein the processing circuitry (24) is configured to use the interpolated representation of the respective image to identify the feature (51) within the scene by determining a difference between the interpolated representation of the respective image and the another one of the plurality of images as mapped to the reference plane (50) in order to identify the feature (51) within the scene.
